# EUROPÄISCHE PATENTSCHRIFT

(11) **EP 2 641 721 B1**
(45) Veröffentlichungstag und Bekanntmachung des Hinweises auf die Patenterteilung: **20.03.2019**
(21) Anmeldenummer: 13160220.3
(22) Anmeldetag: 20.03.2013
(51) Int. Cl.: B29C 49/78, B29C 49/42, B29C 49/64, B29C 49/06, B29K 105/26, B67C 3/22

(54) **VERFAHREN UND VORRICHTUNG ZUM BEHANDELN VON KUNSTSTOFFBEHÄLTNISSEN MIT ZEITREDUZIERUNG BEIM SYNCHRONISIEREN VON ANLAGENTEILEN**
METHOD AND APPARATUS FOR TREATING PLASTIC CONTAINERS WITH TIME REDUCTION WHEN SYNCHRONISING SYSTEM COMPONENTS
PROCÉDÉ ET DISPOSITIF DE TRAITEMENT DE RÉCIPIENTS EN MATIÈRE SYNTHÉTIQUE AVEC GAIN DE TEMPS LORS DE LA SYNCHRONISATION DE PARTIES DE L'INSTALLATION

(30) Priorität: 20.03.2012 DE 102012102358
(43) Veröffentlichungstag der Anmeldung: 25.09.2013
(73) Patentinhaber: Krones AG, 93073 Neutraubling (DE)
(72) Erfinder: Hahn, Wolfgang, 93073 Neutraubling (DE)
(74) Vertreter: Bittner, Bernhard

(56) Entgegenhaltungen:
- EP-A2- 1 837 157
- EP-A2- 2 392 447
- DE-A1-102008 021 527

## Beschreibung

Die vorliegende Erfindung bezieht sich auf ein Verfahren zum Behandeln von Kunststoffbehältnissen und eine auf dieses Verfahren abgestimmte Anlage. Aus dem Stand der Technik sind diverse Verfahren zum Behandeln von Kunststoffbehältnissen bekannt. Dabei ist es insbesondere auch bekannt, dass Kunststoffvorformlinge zunächst in einer Erwärmungseinrichtung bzw. einem Ofen erwärmt werden und anschließend in diesem erwärmten Zustand in einer Umformungseinrichtung, beispielsweise einer Streckblasmaschine, zu Getränkebehältnissen umgeformt werden.

Oftmals ist derartigen Streckblasmaschinen im Anschluss noch eine Fülleinrichtung nachgeordnet, welche die Behältnisse mit einer Flüssigkeit, beispielsweise einem Getränk befüllt. Dabei sind im Stand der Technik Anlagen bekannt, welche zwischen diesen einzelnen Anlagenteilen Pufferstrecken aufweisen, welche eine veränderbare Anzahl von Kunststoffvorformlingen aufnehmen können. Derartige Pufferstrecken sind jedoch relativ kostenintensiv. Daneben sind im Stand der Technik auch Anlagen bekannt, bei denen die einzelnen Einheiten zumindest teilweise miteinander geblockt, bzw. synchronisiert sind. Fällt in einem derartigen Zustand ein bestimmtes Aggregat aus, so wirkt sich dies auch auf die vorangehenden Aggregate aus. Im Falle der oben erwähnten Erwärmungseinrichtung, welche die Kunststoffvorformlinge erwärmt, kann dies problematisch sein, da bei einem Anhalten des Transports der Behältnisse durch die Erwärmungseinrichtung diese sehr schnell überhitzt werden können. Daher ist es aus dem Stand der Technik bekannt, dass bei einem Anhalten, beispielsweise eines nachgeordneten Füllers, zunächst mittels einer Sperre die weitere Zufuhr von Kunststoffvorformlingen in die Erwärmungseinrichtung angehalten wird. Anschließend wir die Erwärmungseinrichtung leer gefahren und die bereits erwärmten Kunststoffvorformlinge ausgesondert.

Nachdem dann der Fehler an der nachfolgenden Komponente behoben wurde, könnte prinzipiell wieder mit der Produktion fortgefahren werden. Allerdings wird zum Aufsynchronisieren der nachfolgenden Komponente, beispielsweise eines Füllers, eine gewisse Zeit benötigt, die dem Produktionsprozess nicht zur Verfügung steht. Aus der DE 10 2008 021 527 A1 ist eine Anlage und ein Verfahren zur Herstellung von Behältern bekannt. Dabei ist diese Anlage in der Lage, bei Erkennen einer Störung in einer Behandlungsvorrichtung die Synchronisation einer Behälterherstellungsvorrichtung mit einer weiteren Behandlungsvorrichtung, wie etwa einem Füller, zeitweise aufzuheben.

In der nachveröffentlichten EP2630074 B1 wird ein Verfahren zum Betreiben einer Abfüllanlage beschrieben. Hierbei wird insbesondere wieder die Phase des Synchronisierens einer Abfüllanlage dargestellt. Der Gegenstand dieser Patentanmeldung wird hinsichtlich des Synchronisierens (allgemeine Beschreibung) ebenfalls durch Bezugnahme vollständig auch zum Gegenstand der vorliegenden Anmeldung gemacht.

Weiterhin sind beispielsweise aus EP 1 837 157 A3 und die EP 2 392 447 A2 Vorrichtungen und ein Verfahren zum Herstellen von Flaschen bzw. Kunststoffbehältern bekannt, deren Anlagenteile nicht aufeinander synchronisiert sind und bei einem auftretenden Störungsfall eine Ausschleusung oder ein Zwischenspeichern der Behältnisse in einer Pufferstrecke vornehmen.

Insbesondere bei neueren synchronisierten Anlagen bzw. Blöcken aus einer Streckblasmaschine und einem Füller kann mit verbesserten Steuerungen ein schnelleres Anlaufen des Blocks und damit ein höherer Wirkungsgrad und eine höhere Verfügbarkeit erreicht werden. Dabei werden bei dieser Steuerung eine Streckblasmaschine und die weiteren geblockten Maschinen nach einer Störung aufsynchronisiert, bevor eine Preformsperre wieder geöffnet wird. Dies kann, je nach Leistung, in einem Bereich von 15 Sekunden dauern.

Der vorliegenden Erfindung liegt daher die Aufgabe zugrunde, zeitliche Verluste, welche insbesondere nach einer Störung entstehen, zu verringern. Dies wird erfindungsgemäß durch ein Verfahren und eine Vorrichtung nach den unabhängigen Ansprüchen erreicht. Vorteilhafte Ausführungsformen und Weiterbildungen sind Gegenstand der Unteransprüche.

Bei einem erfindungsgemäßen Verfahren zum Behandeln von Kunststoffbehältnissen werden Kunststoffvorformlinge mittels einer Transporteinrichtung transportiert und während dieses Transportes von einer Erwärmungseinrichtung erwärmt. Nach dieser Erwärmung werden die Kunststoffvorformlinge von einer weiteren Behandlungseinrichtung in einer weiteren vorgegebenen Weise behandelt, wobei die Erwärmungseinrichtung und die weitere Behandlungseinrichtung wenigstens zeitweise synchronisiert betrieben werden.

Bei Auftreten eines Fehlerzustandes, insbesondere in einer der Erwärmungseinrichtung nachgeordneten Behandlungseinrichtung, wird mittels einer Sperreinrichtung eine Zufuhr der Kunststoffvorformlinge an die Erwärmungseinrichtung unterbrochen. Weiterhin wird zeitlich nach dem Auftreten des Fehlerzustandes die weitere Behandlungseinrichtung während eines vorgegebenen Synchronisierungszeitraums wieder in Synchronisation mit der Erwärmungseinrichtung gebracht. Erfindungsgemäß wird bereits während des Synchronisierungszeitraums oder beim Start der Synchronisierung die Zufuhr der Kunststoffvorformlinge zu der Erwärmungseinrichtung (wieder) zugelassen. Damit wird im Folgenden als Synchronisierungszeitraum insbesondere der gesamte Zeitraum der Synchronisierung einschließlich dessen Startzeitpunkt angesehen.

Wenn bei Auftreten eines Fehlerzustands die Erwärmungseinrichtung der Streckblasmaschine leer ist oder sich zumindest eine vorgegebene Lücke der Kunststoffvorformlinge gebildet hat, welche besonders bevorzugt größer als die Dauer der Synchronisation ist, wird erfindungsgemäß vorgeschlagen, die Preformsperre beim Start der Synchronisation oder nach dem Start und noch vor dem Ende des Synchronisationsvorgangs wieder zu öffnen. Es wird also um die Dauer der Synchronisation bis zu ca. 15 Sekunden früher produziert was generell bei jeglichen Fehlerzuständen, die bereits behoben wurden, möglich ist. Auf diese Weise kann eine Erhöhung des Wirkungsgrades, insbesondere bei Auftreten von Fehlerzuständen, erreicht werden.

Mit anderen Worten: Wird bereits vor dem Erreichen der tatsächlichen Synchronisation die Zufuhr der Kunststoffvorformlinge wieder zugelassen wird auf diese Weise ein Zeitgewinn ermöglicht. Es wäre sogar möglich, die Zufuhr der Kunststoffvorformlinge zu Beginn des Synchronisierungsvorgangs wieder zu ermöglichen.

Vorteilhaft wird bei einem Auftreten eines Fehlerzustands die Synchronisation zwischen der Erwärmungseinrichtung und der weiteren Behandlungseinrichtung wenigstens zeitweise aufgehoben. Insbesondere erfolgt eine derartige Aufhebung bei einem Anhalten oder einem verlangsamten Betrieb der Behandlungseinrichtung (insbesondere der Behandlungseinrichtung, an welcher der Fehlerzustand aufgetreten ist). In einem normalen Arbeitsbetrieb werden (bzw. sind) die Erwärmungseinrichtung und die weitere Behandlungseinrichtung synchronisiert, werden also insbesondere mit gleichen Arbeitsgeschwindigkeiten betrieben. Bei Auftreten eines Fehlerzustands kann es erforderlich sein, dass diese Synchronisation aufgehoben wird, da die Erwärmungseinrichtung ggfs. weiterläuft, während die weitere Behandlungseinrichtung angehalten oder mit einer anderen Geschwindigkeit betrieben wird. Aus diesem Grunde wird die Synchronisation insbesondere nach dem Auftreten eines Fehlerzustands und/oder zum Zwecke der Behebung des Fehlerzustandes aufgehoben.

Bei einem erfindungsgemäßen Verfahren ist die erste weitere Behandlungseinrichtung eine Umformungseinrichtung, welche die Kunststoffvorformlinge zu Kunststoffbehältnissen umformt.

Erfindungsgemäß ist nach der ersten weiteren Behandlungseinrichtung eine Fülleinrichtung vorgesehen, welche die Kunststoffvorformlinge mit einer Flüssigkeit und insbesondere einem Getränk befüllt.

Bei einem weiteren vorteilhaften Verfahren werden mehrere Maschinen der Anlage miteinander synchronisiert. So kann beispielsweise die Streckblasmaschine gemeinsam mit der Erwärmungseinrichtung synchronisiert werden um daneben auch eine Synchronisation mit weiteren Maschinenteilen wie eben der genannten Fülleinrichtung erfolgen.

Bei einem weiteren vorteilhaften Verfahren wird eine zeitliche Länge des Synchronisierungszeitraums ermittelt. Dies kann beispielsweise empirisch erfolgen, indem bei jeweils früheren Fehlerbehebungen diejenige Zeit gemessen wird, die vom Beginn der Synchronisierung bis zum vollständigen Erreichen der Synchronisierung verstrichen ist. Daneben wird vorteilhaft auch eine Lücke der Kunststoffvorformlinge in der Erwärmungseinrichtung ermittelt, bzw. die Länge dieser Lücke. Diese Lücke ergibt sich durch das Schließen der Sperreinrichtung für die Kunststoffvorformlinge. Die Länge dieser Lücke hängt davon ab, wie lange benötigt wird, um einen Zustand, wie insbesondere einen Fehlerzustand, zu beseitigen. Die Länge dieser Lücke der Kunststoffvorformlinge kann dabei beispielsweise durch Abzählen der unbesetzten Halteinrichtungen, welche die Kunststoffvorformlinge transportieren, erfolgen.

Vorteilhaft weist die Transporteinrichtung eine Vielzahl von Halteeinrichtungen auf, welche die Kunststoffvorformlinge während ihres Transports durch die Erwärmungseinrichtung halten. Dabei kann es sich bei diesen Halteeinrichtungen beispielsweise um Dorne handeln, welche in die Mündungen der Behältnisse eingreifen und diese so halten. Daneben kann die Ermittlung dieser Lücke der Kunststoffvorformlinge auch durch eine Zeiteinstellung ermittelt werden, etwa durch eine Ermittlung der Zeitdauer, während derer die Sperreinrichtung gesperrt war. In diesem Fall wird bevorzugt auch eine Arbeitsgeschwindigkeit der Anlage bei einer (durchschnittlichen) (Transport)geschwindigkeit der Kunststoffvorformlinge berücksichtigt.

Ist die Länge dieser Kunststoffvorformlinglücke groß genug bzw. war die Sperreinrichtung lange genug gesperrt, kann die Sperreinrichtung und damit der Einlauf der Kunststoffvorformlinge gleichzeitig zum Beginn der Synchronisation erfolgen. Die Synchronisation wird vorteilhaft erreicht, bevor die geblasenen Behältnisse die zu synchronisierende Übergabestelle (welche sich beispielsweise am Einlauf der Fülleinrichtung befinden kann) erreichen.

Bei einem weiteren bevorzugten Verfahren kann zusätzlich eine Auswurfeinrichtung am Auslauf der Erwärmungseinrichtung aktiviert werden, um solchen Fällen vorzubeugen, in denen die Synchronisation durch Störungen oder dergleichen länger dauert als erwartet. In diesem Falle können Kunststoffvorformlinge wieder (z. B. direkt nach dem Ofen, d.h. der Erwärmungseinrichtung) ausgeworfen werden.

Vorteilhaft hängt der Zeitpunkt des Zulassens der Zufuhr der Kunststoffvorformlinge auch von einer Zeitdauer der Unterbrechung der Zufuhr der Kunststoffvorformlinge ab, aber wird in Unabhängigkeit von dieser Zeitdauer bestimmt.

Bei einem weiteren vorteilhaften Verfahren werden erwärmte Kunststoffvorformlinge und/oder hergestellte Behältnisse - insbesondere bei Auftreten eines Fehlerzustandes - vor Erreichen der Fülleinrichtung ausgeschleust.

Diese ausgeschleusten Kunststoffvorformlinge und/oder Behältnisse können dabei vernichtet werden - unter besonderen Bedingungen können sie jedoch auch (zumindest zum Teil) wieder verwendet werden.

Vorteilhaft wird daher ein vorgegebener Anteil der ausgeschleusten Kunststoffvorformlinge erneut und mittels der Erwärmungseinrichtung erwärmt. Bei der Erwärmung der Kunststoffvorformlinge tritt eine kritische Grenztemperatur auf, ab der die Kunststoffvorformlinge nicht mehr wiederverwendet werden können. Die Idee bei dieser Ausgestaltung besteht darin, zumindest diejenigen Kunststoffvorformlinge, welche die kritische Grenztemperatur noch nicht erreicht haben, wieder zu verwenden.

Die vorliegende Erfindung ist weiterhin auf eine Vorrichtung zum Behandeln von Kunststoffvorformlingen gerichtet. Diese Vorrichtung weist eine Transporteinrichtung auf, welche die Kunststoffvorformlinge entlang eines vorgegebenen Transportpfades transportiert. Weiterhin weist die Vorrichtung eine Erwärmungseinrichtung auf, welche die Kunststoffvorformlinge während ihres Transports erwärmt sowie eine Umformungseinrichtung, welche der Erwärmungseinrichtung nachgeordnet ist und welche die erwärmten Kunststoffvorformlinge zu Kunststoffbehältnissen umformt. Daneben weist die Vorrichtung auch eine Fülleinrichtung auf, welche die Kunststoffvorformlinge mit einer Flüssigkeit befüllt. Dabei sind die Erwärmungseinrichtung, die Umformungseinrichtung und die Fülleinrichtung miteinander in einem Arbeitsbetrieb der Vorrichtung synchronisiert. Weiterhin weist die Vorrichtung eine in der Transportrichtung der Kunststoffvorformlinge vor der Erwärmungseinrichtung angeordnete Sperreinrichtung auf, welche geeignet und bestimmt ist, eine Zufuhr der Kunststoffvorformlinge zu der Erwärmungseinrichtung - insbesondere bei Auftreten eines Fehlerzustandes in einer der Erwärmungseinrichtung nachgeordneten Einrichtung - zu unterbrechen.

Erfindungsgemäß ist die Sperreinrichtung derart gesteuert, dass sie die Zufuhr der Kunststoffvorformlinge zu der Erwärmungseinrichtung bereits zu einen Zeitpunkt wieder freigeben kann, zu dem die Erwärmungseinrichtung und wenigstens eine der dieser Erwärmungseinrichtung nachgeordneten Einrichtungen noch nicht wieder synchronisiert sind. Dabei ist es sogar möglich, dass die Sperreinrichtung bereits zu Beginn der besagten Synchronisation die Zufuhr der Kunststoffvorformlinge wieder freigibt. Vorteilhaft ist es möglich, dass die Sperreinrichtung auf eine Vorgabe des Benutzers hin die Zufuhr der Kunststoffvorformlinge wieder freigibt.

Bei einer vorteilhaften Ausführungsform weist die Vorrichtung eine der Sperreinrichtung entlang des Transportpfads der Kunststoffvorformlinge nachgeordnete Ausschleuseeinrichtung zum Ausschleusen der Kunststoffvorformlinge aus dem Transportpfad auf. Vorteilhaft ist, dass diese Ausschleuseeinrichtung auch der Erwärmungseinrichtung nachgeordnet ist.

Weitere Vorteile und Ausführungsformen ergeben sich aus den beigefügten Zeichnungen:
Darin zeigen:
- Fig. 1: eine schematische Darstellung einer Vorrichtung zum Behandeln von Kunststoffvorformlingen;
- Fig. 2: ein Ablaufschema für ein Verfahren nach dem Stand der Technik;
- Fig. 3: ein Ablaufschema für ein erfindungsgemäßes Verfahren;
- Fig. 4: ein detailliertes Ablaufschema für ein erfindungsgemäßes Verfahren; und
- Fig. 5: eine weitere schematische Darstellung einer erfindungsgemäßen Anlage.

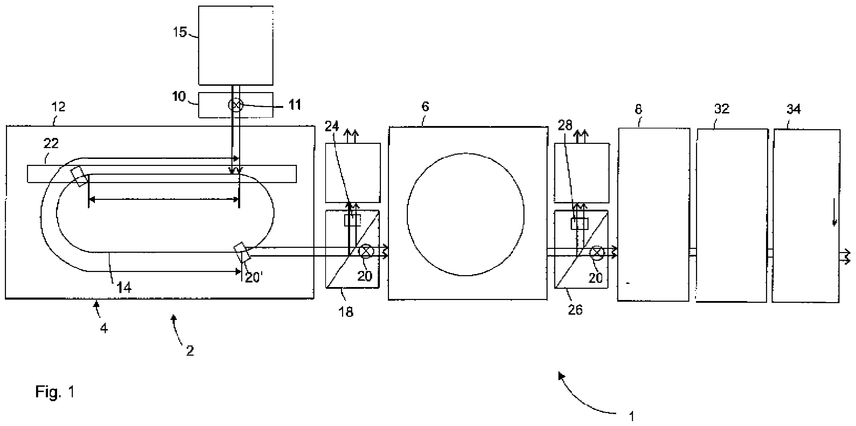

Fig. 1 zeigt eine Vorrichtung 1 zur Herstellung und Weiterbehandlung von Kunststoffvorformlingen bzw. Kunststoffbehältnissen. Dabei weist diese Vorrichtung eine in ihrer Gesamtheit nur grobschematisch mit 2 bezeichnete Transporteinrichtung auf, welche die Kunststoffvorformlinge und später die Kunststoffbehältnisse transportiert. Dabei kann es sich beispielsweise bei der Transporteinrichtung 2 innerhalb einer Erwärmungseinrichtung 4 um eine umlaufende Kette handeln, welche eine Teilstrecke der gesamten Transporteinrichtung bildet und an der eine Vielzahl von Kunststoffvorformlingen transportiert wird. Das Bezugszeichen 4 bezieht sich auf die Erwärmungseinrichtung. Die Transporteinrichtung kann jedoch auch andere Elemente wie beispielsweise Transportsterne oder dergleichen aufweisen.

Das Bezugszeichen 14 kennzeichnet den Transport - speziell der Kunststoffvorformlinge - durch die Erwärmungseinrichtung bzw. eine entsprechende Transporteinrichtung. Das Bezugszeichen 10 kennzeichnet grobschematisch eine Zuführeinrichtung für die Kunststoffvorformlinge an die Erwärmungseinrichtung 4. Die Kunststoffvorformlinge können dabei beispielsweise aus einem Vorratsbehältnis 15 zugeführt werden.

Über eine Sperreinrichtung 11 kann die Zufuhr der Kunststoffvorformlinge in die Erwärmungseinrichtung 2 unterbrochen werden. Das Bezugszeichen 22 kennzeichnet eine erste Ausleiteinrichtung zum Ausleiten der Kunststoffvorformlinge. Dabei ist es möglich, dass bei Auftreten eines Fehlerzustandes an dieser Stelle die Kunststoffvorformlinge aus der Erwärmungseinrichtung 4 ausgeleitet werden. Dies hat den Hintergrund, dass in diesem Bereich die Erwärmung der Kunststoffvorformlinge noch nicht so weit fortgeschritten ist und damit die Kunststoffvorformlinge wiederverwendet werden könnten. Das Bezugszeichen 18 kennzeichnet schematisch eine Übergabeeinrichtung, welche die erwärmten Kunststoffvorformlinge von der Erwärmungseinrichtung an die Umformungseinrichtung 6 überführt. Auch hierbei kann es sich um einen Transportstern handeln.

Das Bezugszeichen 20 kennzeichnet eine weitere Sperreinrichtung, welche hier zwischen der Erwärmungseinrichtung 4 und der Umformungseinrichtung 6 angeordnet ist und mittels derer der Transport der Kunststoffvorformlinge in die Umformungseinrichtung 6 unterbrochen werden kann. Auch hier kann eine weitere Ausleiteinrichtung 24 vorgesehen sein, welche die vollständig erwärmten Kunststoffvorformlinge aus dem Transportpfad ausschleust.

Das Bezugszeichen 26 kennzeichnet eine Übergabeeinrichtung, mittels derer die nunmehr hergestellten Behältnisse an eine Fülleinrichtung 8 übergeben werden. Auch hier kann nochmals eine Ausleitvorrichtung 28 vorgesehen sein, mittels derer bereits hergestellte Kunststoffbehältnisse ausgeschleust werden können, bevor sie die Fülleinrichtung 8 erreichen. Die Bezugszeichen 32 und 34 kennzeichnen weitere Aggregate der Anlage wie beispielsweise eine Verschließeinrichtung 32 und eine Etikettiermaschine 34. Auch in diesen weiteren Aggregaten können Fehler auftreten, welche sich auf die gesamte Anlage auswirken. Vorteilhaft werden zumindest die Fülleinrichtung 8, die Umformungseinrichtung 6 und die Erwärmungseinrichtung 4 im Blockbetrieb betrieben, d. h. insbesondere synchronisiert. Bei Auftreten von Fehlerzuständen sind daher die entsprechenden Ausleitvorrichtungen 22 und 28 vorgesehen.

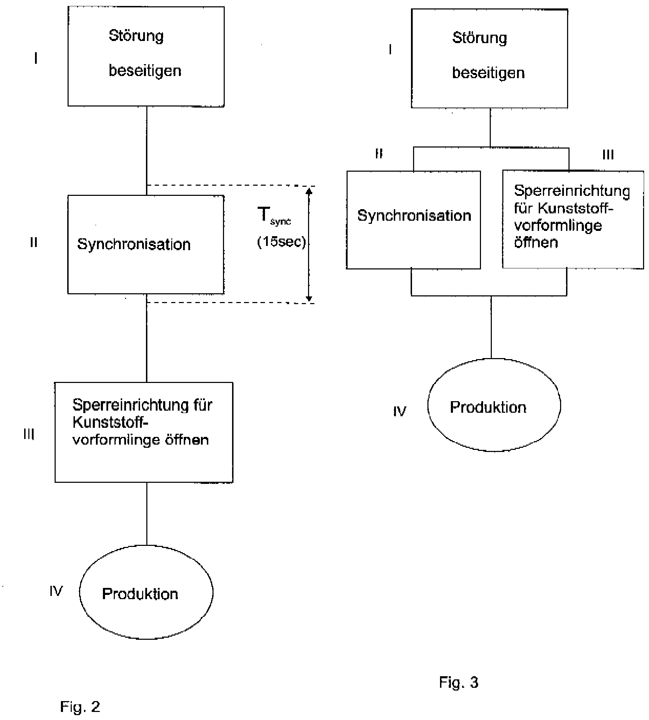

Fig. 2 zeigt eine schematische Darstellung eines Ablaufs zur Störungsbeseitigung nach dem Stand der Technik. In dem Stadium I wird eine Störung an einer Maschine, beispielsweise an der Fülleinrichtung 8 beseitigt. Anschließend erfolgt wiederum eine Synchronisation dieser besagten Maschine mit den vorauslaufenden Maschinen (Stadium II). Diese Synchronisation kann sich beispielsweise über einen Zeitraum T_{Sync} von 15 Sekunden erstrecken. Nachdem die Synchronisation abgeschlossen ist, kann die Sperreinrichtung 11 wieder geöffnet werden (Stadium III) und es können wieder Kunststoffvorformlinge der Erwärmungseinrichtung 4 zugeführt werden. Im zeitlichen Stadium IV kann die Produktion wieder normal aufgenommen werden.

Fig. 3 zeigt einen erfindungsgemäßen Ablauf. Auch hier wird zunächst in dem Verfahrensschritt I. eine Störung beseitigt, jedoch erfolgt bereits während der Synchronisation in einem Verfahrensschritt bzw. Stadium II, zumindest teilweise zeitgleich die Öffnung der Sperre 11 (Stadium III). Man erkennt, dass die Produktion in dem Verfahrensschritt IV hier früher wieder starten kann, und in diesem Falle die 15 Sekunden eingespart werden, die zum Aufsynchronisieren der nachfolgenden Behandlungseinrichtung wie der Fülleinrichtung benötigt werden.

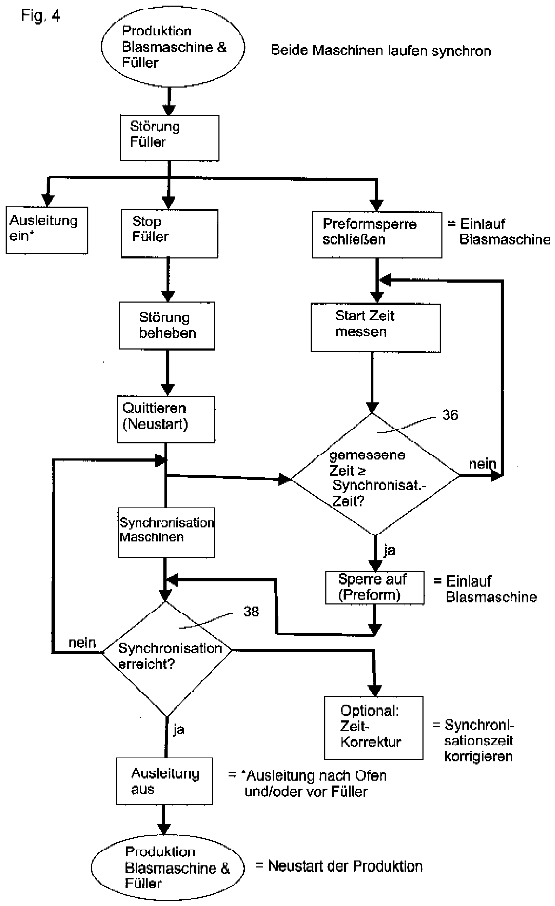

Fig. 4 zeigt ein detaillierteres Ablaufschema für ein erfindungsgemäßes Verfahren. Im normalen Arbeitsbetrieb laufen dabei die Fülleinrichtung 8 und auch die Umformungsmaschine 6 sowie auch die Erwärmungseinrichtung 4 synchron. Nunmehr tritt eine Störung beispielweise in der Fülleinrichtung 8 auf. Erfindungsgemäß wird nunmehr eine Ausleitung aktiviert, d.h. eine Ausleitung der Kunststoffvorformlinge nach der Erwärmungseinrichtung 4 und/oder auch eine Ausleitung der bereits umgeformten Behältnisse nach der Umformungseinrichtung 6. Die Fülleinrichtung 8 wird entsprechend angehalten und die Sperreinrichtung 11 geschlossen, sodass keine weiteren Kunststoffvorformlinge mehr in die Erwärmungseinrichtung 2 einlaufen.

Weiterhin wird erfindungsgemäß nunmehr die Zeit gemessen, die vergangen ist, während die Sperreinrichtung 11 die Zuführung der Kunststoffvorformlinge an die Erwärmungseinrichtung 4 unterbunden hat. Zeitgleich kann die Störung an der nachgeordneten Behandlungsmaschine wie der Fülleinrichtung behoben werden.

Erfindungsgemäß wird die gemessene Zeit nunmehr mit der Synchronisationszeit verglichen. Weiterhin wird nach Behebung ein Neustart vorgenommen bzw. quittiert, dass die Störung behoben ist. Falls nunmehr die gemessene Zeit größer oder gleich ist, als die Synchronisationszeit, wird erfindungsgemäß bereits zu diesem Zeitpunkt die Sperreinrichtung 11 geöffnet. Dies erfolgt erfindungsgemäß jedoch lediglich, wenn an eine Prozessoreinrichtung 36 mitgeteilt wurde, dass die Fülleinrichtung bereits wieder gestartet werden kann. Nunmehr wird die Fülleinrichtung 8 synchronisiert und gleichzeitig die Sperreinrichtung 11 geöffnet, d. h. nunmehr werden wieder Kunststoffvorformlinge in die Erwärmungseinrichtung 4 eingeführt. Erfindungsgemäß wird über eine weitere Regelschleife 38 geprüft, ob die Synchronisation bereits erreicht wurde. In diesem Zeitraum ist keine Ausleitung von Kunststoffvorformlingen oder Kunststoffbehältnissen nötig, da zunächst noch keine weiteren Kunststoffvorformlinge aus den noch zumindest teilweise leergefahren Erwärmungseinrichtungen nachgefördert werden.

Falls gleichwohl wegen eines zu frühen Beginns der Zuführung der Vorformlinge in die Erwärmungseinrichtung bereits wieder Kunststoffvorformlinge angefördert werden, können diese noch ausgeleitet werden, solange die Synchronisation noch nicht erreicht ist. Sobald die Synchronisation erreicht ist, wird auch die Ausleitung wieder deaktiviert und die Kunststoffvorformlinge können wieder an die Blasmaschine bzw. von der Blasmaschine weiter an die Fülleinrichtung übergeben werden. Nunmehr beginnt wieder die Produktion.

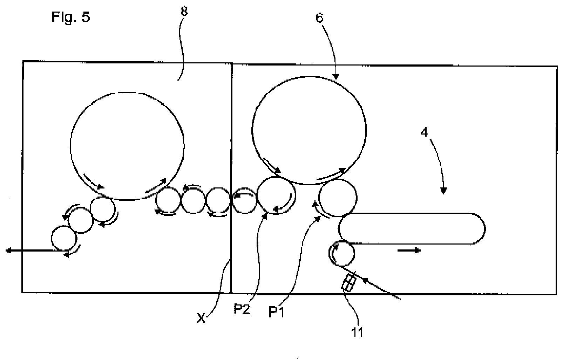

Fig. 5 veranschaulicht weiterhin eine erfindungsgemäße Anordnung. Auch hier ist wieder eine Erwärmungseinrichtung vorgesehen, sowie eine Umformungseinrichtung 6 und ein nachgeordneter Füller. Das Bezugszeichen X Kennzeichnet den Synchronisationspunkt. An diesem Punkt muss eine Synchronisation von der Umformungseinrichtung 6 und der Fülleinrichtung 8 gegeben sein, wenn die Behältnisse wieder übergeben werden. Die Dauer des Transports der Kunststoffvorformlinge bis zu diesem Synchronisationspunkt X kann wiederum, wie oben erwähnt, für die Synchronisation genutzt werden, sodass, wie oben erwähnt, eine Zeiteinsparung erreicht wird. Die Punkte P1 und P2 zeigen jeweils Möglichkeiten für eine Ausleitung an. Dabei können in dem Punkt P1 erwärmte Kunststoffvorformlinge ausgeleitet werden und in dem Punkt P2 bereits hergestellte jedoch noch leere Behältnisse.

### Bezugszeichenliste

- 1: Vorrichtung
- 2: Transporteinrichtung
- 4: Erwärmungseinrichtung
- 6: Behandlungseinrichtung, Umformungseinrichtung
- 8: Fülleinrichtung
- 10: Zuführeinrichtung
- 11,12,20: Sperreinrichtung
- 14: Transport
- 15: Vorratsbehältnis
- 18: Übergabeeinrichtung
- 22,24,28: Ausleiteinrichtung
- 26: Übergabeeinrichtung
- 32,: Aggregat, Verschließeinrichtung
- 34: Aggregat, Ettikettiereinrichtung
- 36: Prozessoreinrichtung
- 38: Regelschleife

- T_{Sync}: Zeitraum für Synchronisation
- I - IV: Verfahrensstadien
- P1, P2: Pfeil (Ausleitung)
- X: Synchronisationspunkt

## Patentansprüche

1. Verfahren zum Behandeln von Kunststoffvorformlingen, wobei die Kunststoffvorformlinge mittels einer Transporteinrichtung (2) transportiert werden und während dieses Transports von einer Erwärmungseinrichtung (4) erwärmt werden und nach dieser Erwärmung von einer ersten weiteren Behandlungseinrichtung (6), welche eine Umformungseinrichtung (6) ist, welche die Kunststoffvorformlinge zu Kunststoffbehältnissen umformt und von einer zweiten Behandlungseinrichtung (8), welche eine Fülleinrichtung (8) ist, welche die Kunststoffbehältnisse mit einer Flüssigkeit befüllt, in einer weiteren vorgegebenen Weise behandelt werden, wobei die Erwärmungseinrichtung (4), die Umformungseinrichtung (6) und die Fülleinrichtung (8) wenigstens zeitweise synchronisiert betrieben werden und wobei bei Auftreten eines Fehlerzustandes in einer der Erwärmungseinrichtung (4) nachgeordneten Behandlungseinrichtung (6,8) mittels einer Sperreinrichtung (11) eine Zufuhr der Kunststoffvorformlinge an die Erwärmungseinrichtung (4) unterbrochen wird und eine Ausleitung der Kunststoffvorformlinge nach der Erwärmungseinrichtung (4) und/oder auch eine Ausleitung der bereits umgeformten Behältnisse nach der Umformungseinrichtung (6) aktiviert wird, wobei zeitlich nach dem Auftreten des Fehlerzustandes die weitere Behandlungseinrichtung (6,8) während eines vorgegebenen Synchronisierungszeitraums wieder in Synchronisation mit der Erwärmungseinrichtung (4) gebracht wird **dadurch gekennzeichnet, dass**
während des Synchronisierungszeitraums oder beim Start der Synchronisierung die Sperreinrichtung (11) derart gesteuert ist, dass sie die Zufuhr der Kunststoffvorformlinge zu der Erwärmungseinrichtung (4) bereits zu einem Zeitpunkt wieder freigeben kann, zu dem die Erwärmungseinrichtung und wenigstens eine der dieser nachgeordneten Einrichtungen (6, 8) noch nicht wieder synchronisiert sind, und wobei mittels einer Regelschleife (38) geprüft wird, ob eine Synchronisation bereits erreicht wurde und wobei die Zeit gemessen wird, die vergangen ist, während die Sperreinrichtung (11) die Zuführung der Kunststoffvorformlinge an die Erwärmungseinrichtung (4) unterbunden hat, wobei diese gemessene Zeit mit der Synchronisationszeit verglichen wird und, falls die gemessene Zeit größer oder gleich der Synchronisationszeit ist die Sperreinrichtung (11) wieder geöffnet wird, wenn einer Prozessoreinrichtung (36) mitgeteilt wurde, dass die Fülleinrichtung bereits wieder gestartet werden kann.

2. Verfahren nach Anspruch 1,
**dadurch gekennzeichnet, dass**
bei Auftreten des Fehlerzustands die Synchronisation zwischen der Erwärmungseinrichtung (4) und der weiteren Behandlungseinrichtung (6,8) wenigstens zeitweise aufgehoben wird.

3. Verfahren nach wenigstens einem der vorangegangenen Ansprüche,
**dadurch gekennzeichnet, dass**
eine zeitliche Länge des Synchronisierungszeitraums T_{Sync} ermittelt wird.

4. Verfahren nach wenigstens einem der vorangegangenen Ansprüche,
**dadurch gekennzeichnet, dass**
der Zeitpunkt des Zulassens der Zufuhr der Kunststoffvorformlinge auch in Abhängigkeit von einer Zeitdauer der Unterbrechung der Zufuhr der Kunststoffvorformlinge bestimmt wird.

5. Verfahren nach wenigstens einem der vorangegangenen Ansprüche,
**dadurch gekennzeichnet, dass**
erwärmte Kunststoffvorformlinge und/oder hergestellte Behältnisse vor Erreichen der Fülleinrichtung ausgeschleust werden.

6. Verfahren nach Anspruch 7,
**dadurch gekennzeichnet, dass**
ein vorgegebener Anteil der ausgeschleusten Kunststoffvorformlinge erneut mittels der Erwärmungseinrichtung erwärmt wird.

7. Vorrichtung (1) zum Behandeln von Kunststoffvorformlingen mit einer Transporteinrichtung (2), welche dazu geeignet ist, die Kunststoffvorformlinge (10) entlang eines vorgegebenen Transportpfades zu transportieren, mit einer Erwärmungseinrichtung (4), welche dazu geeignet ist, die Kunststoffvorformlinge während ihres Transports zu erwärmen, mit einer Umformungseinrichtung (6), welche der Erwärmungseinrichtung (4) nachgeordnet ist und welche dazu geeignet ist, die erwärmten Kunststoffvorformlinge (10) zu Kunststoffbehältnissen umzuformen und mit einer Fülleinrichtung (8), welche dazu geeignet ist, die Kunststoffbehältnisse mit einer Flüssigkeit zu befüllen, wobei die Vorrichtung so eingerichtet ist, dass die Erwärmungseinrichtung (4), die Umformungseinrichtung (6) und die Fülleinrichtung (8) in einem Arbeitsbetrieb der Vorrichtung (1) miteinander synchronisiert sind und mit einer in der Transportrichtung der Kunststoffvorformlinge (10) vor der Erwärmungseinrichtung (4) angeordneten Sperreinrichtung (11), welche geeignet und bestimmt ist, eine Zufuhr der Kunststoffvorformlinge zu der Erwärmungseinrichtung (4) - insbesondere bei Auftreten eines Fehlerzustands in einer der Erwärmungseinrichtung (4) nachgeordneten Einrichtung (6, 8) zu unterbrechen-, wobei die Vorrichtung so eingerichtet ist, dass eine Ausleitung der Kunststoffvorformlinge nach der Erwärmungseinrichtung (4) und/oder auch eine Ausleitung der bereits umgeformten Behältnisse nach der Umformungseinrichtung (6) aktiviert wird,
**dadurch gekennzeichnet, dass** die Vorrichtung so eingerichtet ist, dass die Sperreinrichtung (11) derart gesteuert ist, dass sie die Zufuhr der Kunststoffvorformlinge zu der Erwärmungseinrichtung (4) bereits zu einem Zeitpunkt wieder freigeben kann, zu dem die Erwärmungseinrichtung und wenigstens eine der dieser nachgeordneten Einrichtungen (6, 8) noch nicht wieder synchronisiert sind, wobei eine Regelschleife (38) vorgesehen ist, mittels derer prüfbar ist, ob eine Synchronisation erreicht wurde und wobei die Zeit messbar ist, die vergangen ist, während die Sperreinrichtung (11) die Zuführung der Kunststoffvorformlinge an die Erwärmungseinrichtung (4) unterbunden hat und wobei mittels einer Prozessoreinrichtung (36) die gemessene Zeit mit der Synchronisationszeit vergleichbar ist und, falls die gemessene Zeit größer oder gleich der Synchronisationszeit ist, die Sperreinrichtung (11) wieder geöffnet wird, wenn der Prozessoreinrichtung (36) mitgeteilt wurde, dass die Fülleinrichtung bereits wieder gestartet werden kann.

8. Vorrichtung (1) nach Anspruch 7,
**dadurch gekennzeichnet, dass**
die Vorrichtung eine der Sperreinrichtung (11) nachgeordnete Ausleiteinrichtung (22,24,28) zum Ausschleusen der Kunststoffvorformlinge aus dem Transportpfad aufweist.

## Claims

1. A method of treating plastics material preforms, wherein the plastics material preforms are conveyed by means of a conveying device (2) and are heated by a heating device (4) during this conveying and after this heating they are treated by a first further treatment device (6), which is a shaping device (6), which shapes the plastics material preforms into plastic containers and by a second treatment device (8), which is a filling device (8), which fills the plastic containers with a liquid, in a further pre-set manner, wherein the heating device (4), the forming device (6) and the filling device are operated in a synchronized manner at least for a time and wherein in the event of an error state occurring in a treatment device (6, 8) arranged downstream of the heating device (4) a supply of the plastics material preforms to the heating device (4) is interrupted by means of a blocking device (11) and a rejection of the plastics material preforms after the heating device (4) and/or also a rejection of the already shaped containers after the shaping device (6) is activated, wherein chronologically after the occurrence of the error state the further treatment device (6, 8) is brought into synchronism again with the heating device (4) during a pre-set synchronization period,
**characterized in that**
during the synchronization period or at the start of the synchronization the blocking device (11) is controlled in such a way that it can release the supply of the plastics material preforms to the heating device (4) again at a point in time at which the heating device and at least one of the devices (6, 8) arranged downstream of it are not yet synchronized again and wherein a control loop (38) is used to check whether synchronization has already been achieved and wherein the time which has passed while the blocking device (11) has prevented the supply of the plastics material preforms to the heating device (4) is measured, wherein said measured time is compared with said synchronization time, and if said measured time is greater than or equal to said synchronization time, said blocking device (11) is reopened when a processor device (36) has been notified that said filling device can already be restarted.

2. A method according to claim 1,
**characterized in that**
when the error state arises the synchronization between the heating device (4) and the further treatment device (6, 8) is discontinued at least for a time.

3. A method according to at least one of the preceding claims,
**characterized in that**
a duration of the synchronization time T_{Sync} is determined.

4. A method according to at least one of the preceding claims,
**characterized in that**
the point in time of permitting the supply of the plastics material preforms is also determined in a manner dependent upon a length of time of the interruption of the supply of the plastics material preforms.

5. A method according to at least one of the preceding claims,
**characterized in that**
heated plastics material preforms and/or manufactured containers are separated out before reaching the filling device.

6. A method according to claim 7,
**characterized in that**
a pre-set portion of the separated out plastics material preforms is heated once more by means of the heating device.

7. An apparatus (1) for the treatment of plastics material preforms with a conveying device (2), which is suitable for conveying the plastics material preforms (10) along a pre-set conveying path, with a heating device (4), which is suitable for heating the plastics material preforms during their conveying, with a shaping device (6), which is arranged downstream of the heating device (4) and which is suitable for shaping the heated plastics material preforms (10) into plastics material containers, and with a filling device (8) which is suitable for filling the plastics material containers with a liquid, wherein the apparatus is configured in such a way that the heating device (4), the shaping device (6) and the filling device (8) are synchronized with one another in a working operation of the apparatus (1), and with a blocking device (11), which is arranged upstream of the heating device (4) in the conveying direction of the plastics material preforms (10) and which is suitable and intended for interrupting a supply of the plastics material preforms to the heating device (4) - in particular in the event of an occurrence of an error state in a device (6, 8) arranged downstream of the heating device (4) - wherein the apparatus is configured in such a way that a rejection of the plastics material preforms after the heating device (4) and/or also a rejection of the already shaped containers after the shaping device (6) is activated,
**characterized in that**
the apparatus is configured that the blocking device (11) is controlled in such a way that it can release the supply of the plastics material preforms to the heating device (4) again at a point in time at which the heating device and at least one of the devices (6, 8) arranged downstream of the latter are not yet synchronized again, wherein a control loop (38) is provided by means of which it can be checked whether synchronization has been achieved and wherein the time which has passed while the blocking device (11) has stopped feeding the plastics material preforms to the heating device (4) is measurable and wherein by means of a processor device (36) the measured time is comparable to the synchronization time and, if the measured time is greater than or equal to the synchronization time, the blocking device (11) is reopened when the processor device (36) is notified that the filling means can already be restarted.

8. An apparatus (1) according to claim 7,
**characterized in that**
the apparatus has a diversion device (22, 24, 28) arranged downstream of the blocking device (11) in order to separate the plastics material preforms out of the conveying path.

## Revendications

1. Procédé de traitement d'ébauches en plastique, dans lequel les ébauches en plastique sont transportées au moyen d'un dispositif de transport (2) et sont chauffées pendant ce transport par un dispositif de chauffage (4) et, une fois chauffées, sont traitées d'une autre manière prédéfinie par un premier dispositif de traitement (6) supplémentaire, lequel est un dispositif de mise en forme (6), lequel transforme les ébauches en plastique en récipients en plastique, et par un deuxième dispositif de traitement (8), lequel est un dispositif de remplissage (8), lequel remplit les récipients en plastique d'un liquide, dans lequel le dispositif de chauffage (4), le dispositif de mise en forme (6) et le dispositif de remplissage (8) fonctionnent de manière synchronisée au moins par intermittence et dans lequel, à l'apparition d'une anomalie dans un dispositif de traitement (6, 8) situé en aval du dispositif de chauffage (4), une amenée des ébauches en plastique au dispositif de chauffage (4) est interrompue au moyen d'un dispositif de blocage (11) et une évacuation des ébauches en plastique en aval du dispositif de chauffage (4) et/ou bien une évacuation des contenants déjà mis en forme en aval du dispositif de mise en forme (6) sont activées, dans lequel, à la suite de l'apparition de l'anomalie, le dispositif de traitement (6, 8) supplémentaire est à nouveau amené en synchronisation avec le dispositif de chauffage (4) pendant un laps de temps de synchronisation prédéfini,
**caractérisé en ce que**
pendant le laps de temps de synchronisation ou au démarrage de la synchronisation, le dispositif de blocage (11) est commandé de manière à pouvoir à nouveau libérer l'amenée des ébauches en plastique au dispositif de chauffage (4) déjà à un moment où le dispositif de chauffage et au moins l'un des dispositifs (6, 8) situé en aval de celui-ci ne sont pas encore à nouveau synchronisés, et dans lequel on contrôle au moyen d'une boucle de régulation (38) si une synchronisation a déjà été atteinte et dans lequel on mesure le temps qui est passé pendant que le dispositif de blocage (11) a empêché l'amenée des ébauches en plastique au dispositif de chauffage (4), dans lequel ce temps mesuré est comparé au temps de synchronisation et, au cas où le temps mesuré serait supérieur ou égal au temps de synchronisation, le dispositif de blocage (11) est rouvert lorsqu'il a été notifié à un dispositif à processeur (36) que le dispositif de remplissage peut déjà être redémarré.

2. Procédé selon la revendication 1,
**caractérisé en ce que**
à l'apparition de l'anomalie, la synchronisation entre le dispositif de chauffage (4) et le dispositif de traitement (6, 8) supplémentaire est arrêtée au moins temporairement.

3. Procédé selon au moins l'une des revendications précédentes,
**caractérisé en ce que**
une longueur temporelle de l'intervalle de temps de synchronisation T_{Sync} est déterminée.

4. Procédé selon au moins l'une des revendications précédentes,
**caractérisé en ce que**
le moment de l'autorisation de l'amenée des ébauches en plastique est également défini en fonction d'une durée de l'interruption de l'amenée des ébauches en plastique.

5. Procédé selon au moins l'une des revendications précédentes,
**caractérisé en ce que**
les ébauches en plastique chauffées et/ou les contenants produits sont évacués avant d'avoir atteint le dispositif de remplissage.

6. Procédé selon la revendication 7,
**caractérisé en ce que**
une part prédéfinie des ébauches en plastique évacuées est à nouveau chauffée au moyen du dispositif de chauffage.

7. Dispositif (1) de traitement d'ébauches en plastique pourvu d'un dispositif de transport (2), lequel est adapté à transporter les ébauches en plastique le long d'un trajet de transport prédéfini, d'un dispositif de chauffage (4), lequel est adapté à chauffer les ébauches en plastique (10) pendant le transport de celles-ci, d'un dispositif de mise en forme (6), lequel est situé en aval du dispositif de chauffage (4) et lequel est adapté à transformer les ébauches en plastique (10) chauffées en récipients en plastique, et d'un dispositif de remplissage (8), lequel est adapté à remplir les récipients en plastique d'un liquide, dans lequel le dispositif est conçu pour que le dispositif de chauffage (4), le dispositif de mise en forme (6) et le dispositif de remplissage (8), lorsque le dispositif (1) se trouve en mode travail, soient synchronisés les uns avec les autres, et d'un dispositif de blocage (11) agencé en amont du dispositif de chauffage (4) dans le sens de transport des ébauches en plastique (10), et adapté et destiné à interrompre une amenée des ébauches en plastique au dispositif de chauffage (4) - en particulier à l'apparition d'une anomalie dans un dispositif (6, 8) situé en aval du dispositif de chauffage (4) - dans lequel le dispositif est conçu de telle sorte qu'une évacuation des ébauches en plastique en aval du dispositif de chauffage (4) et/ou une évacuation des contenants déjà mis en forme en aval du dispositif de mise en forme (6) sont activées,
**caractérisé en ce que**
le dispositif est conçu de telle sorte que le dispositif de blocage (11) est commandé de manière à pouvoir à nouveau libérer l'amenée des ébauches en plastique au dispositif de chauffage (4) déjà à un moment où le dispositif de chauffage et au moins l'un des dispositifs (6, 8) situés en aval de celui-ci ne sont pas encore à nouveau synchronisés, dans lequel une boucle de régulation (38) est prévue, au moyen de laquelle il est possible de contrôler si une synchronisation a été atteinte et dans lequel il est possible de mesurer le temps qui est passé pendant que le dispositif de blocage (11) a empêché l'amenée des ébauches en plastique au dispositif de chauffage (4) et dans lequel, au moyen d'un dispositif à processeur (36), le temps mesuré peut être comparé au temps de synchronisation et, au cas où le temps mesuré serait supérieur ou égal au temps de synchronisation, le dispositif de blocage (11) est rouvert lorsqu'il a été notifié au dispositif à processeur (36) que le dispositif de remplissage peut déjà être redémarré.

8. Dispositif (1) selon la revendication 7,
**caractérisé en ce que**
le dispositif présente un système d'évacuation (22, 24, 28) situé en aval du système de blocage (11) et destiné à évacuer les ébauches en plastique du trajet de transport.
